# EUROPÄISCHE PATENTSCHRIFT

(11) **EP 4 022 701 B1**
(45) Veröffentlichungstag und Bekanntmachung des Hinweises auf die Patenterteilung: **11.03.2026**
(21) Anmeldenummer: 21722420.3
(22) Anmeldetag: 27.04.2021
(51) Int. Cl.: H01M 8/0206, H01M 8/0256, H01M 8/026, H01M 8/04089, H01M 8/10, H01M 8/241, H01M 8/24, H01M 8/028, H01M 8/1018

(54) **BIPOLARPLATTE**
BIPOLAR PLATE
PLAQUE BIPOLAIRE

(30) Priorität: 18.05.2020 DE 102020113353
(43) Veröffentlichungstag der Anmeldung: 06.07.2022
(73) Patentinhaber: Audi AG, 85045 Ingolstadt (DE)
(72) Erfinder: KEITSCH, Oliver, 74076 Heilbronn (DE); LIPPL, Fabian, 68163 Mannheim (DE)
(74) Vertreter: Hentrich Patent- & Rechtsanwaltspartnerschaft mbB
(86) Internationale Anmeldenummer: PCT/EP2021/060927
(87) Internationale Veröffentlichungsnummer: WO 2021/233647

(56) Entgegenhaltungen:
- EP-A1- 2 618 413
- DE-A1- 10 163 631
- DE-U1- 202017 103 229
- KR-A- 20120 042 376
- US-B2- 7 491 463

## Beschreibung

Die Erfindung betrifft eine Bipolarplatte mit einem ersten Einlassport und einem eine Mehrzahl von Kanälen aufweisenden ersten Flussfeld zur Verbindung des ersten Einlassports mit einem ersten Auslassport für einen ersten Reaktanten, und mit einem zweiten Einlassport und einem eine Mehrzahl von Kanälen aufweisenden zweiten Flussfeld zur Verbindung des zweiten Einlassports mit einem zweiten Auslassport für einen zweiten Reaktanten, wobei randseitig von mindestens einem der Flussfelder mindestens ein Bypasskanal vorliegt, und wobei dem Bypasskanal mindestens eine Strömungsverbindung zugeordnet ist, die aus dem Bypasskanal in einen benachbarten Randkanal des Flussfeldes abzweigt, dadurch gekennzeichnet, dass der Bypasskanal in einem Bereich der Bipolarplatte verläuft, der außerhalb eines aktiven Bereichs liegt, in welchem die elektrochemische Reaktion verläuft, dass die Strömungsverbindung in der dem Auslassport zugewandten Hälfte des Flussfeldes ausgebildet ist, um so den Reaktanten in den Bereich des Flussfeldes einzuleiten, in dem bereits eine chemische Reduktion einer Reaktantenkonzentration vorliegt und dass stromauf des Auslassports in dem Bypasskanal ein Bypassblocker angeordnet ist.

Eine Brennstoffzelle umfasst eine Membran-Elektrodenanordnung gebildet aus einer protonenleitenden Membran, auf deren einer Seite die Anode und auf deren anderer Seite die Kathode ausgebildet ist. In einer Brennstoffzellenvorrichtung sind in der Regel mehrere Brennstoffzellen linear zu einem Brennstoffzellenstapel zusammengefasst, um eine ausreichend große Leistungsabgabe zu ermöglichen.

Den Elektroden der Brennstoffzellen werden mittels Bipolarplatten Reaktantengase zugeführt, nämlich anodenseitig insbesondere Wasserstoff und kathodenseitig Sauerstoff bzw. ein sauerstoffhaltiges Gas, insbesondere Luft. Bei der Versorgung der Brennstoffzelle mit den Reaktanten werden diese über einen Kanal in die Platte geleitet, die unter Nutzung des Kanals oder einer Mehrzahl von Kanälen eine Verteilung der Reaktanten in einen aktiven Bereich bewirken soll, um mittels eines Flussfeldes die gesamte Fläche der Elektroden möglichst gleichmäßig zu versorgen. Aufgrund der auf der ganzen Fläche des aktiven Bereichs ablaufenden chemischen Reaktion werden die frischen Reaktantengase immer weiter aufgebraucht, so dass die Partialdrücke der Reaktantengase vom Einlass zum Auslass hin abnehmen, während der Anteil der Produktgase ansteigt.

Zusätzlich zu den Reaktantengasen wird auch ein Kühlmedium durch die Bipolarplatte durchgeführt, so dass auf kleinstem Raum drei verschiedene Medien technisch dicht getrennt geführt werden müssen. Deshalb werden in der Regel zwei metallische Umformteile zu einer Bipolarplatte verschweißt, wobei aufgrund des Bauraumbedarfs rund um das aktive Flussfeld ein Überlappbereich vorgehalten werden muss, in dem wegen der Fertigungs- und Montagetoleranzen Hohlräume entstehen, durch welche Reaktantengase am Flussfeld vorbei strömen können, also ein unerwünschter Bypass vorliegt, dessen Querschnitt durch blockierende Elemente verringert wird. Gleichwohl gelangen Reaktantengase am aktiven Bereich vorbei ungenutzt zum Auslass. In der DE 10 2017 118 143 A1 ist als blockierendes Element in einem Umgehungskanal einer ersten Bipolarplatte eine Prägung ausgebildet, die die Richtung der Reaktionsmittelströmung stört und Turbulenzen sowie Druckerhöhungen bewirkt, die das Reaktionsmittel aus dem Umgehungskanal in eine Gasdiffusionsschicht umlenken, die zwischen der ersten Bipolarplatte und einer zweiten Bipolarplatte angeordnet ist. Eine gleichmäßige Beschickung der Flussfelder von den Einlasskanälen für den Brennstoff und das Oxidationsmittel ist in der US 2012/0129071 A1 beschrieben, wobei den Einlässen nachgelagert Einlasspuffer ausgebildet sind für eine verbesserte Gleichverteilung über die gesamte Breite der Flussfelder. Die DE 10 2016 225 651 A1 beschreibt eine Endzellen-Heizungsanordnung, bei der in einem Gehäuse Bypass-Strömungswege zur Verbindung der Einlassverteiler und der Auslassverteiler vorgesehen sind, um Tröpfchen umzuleiten, die in den Brennstoffzellenstapel strömen. In der US 7 491 463 B2 wird eine Bipolarplatte beschrieben, die Zuleitungsbereiche und Ableitungsbereiche zur Verteilung eines Mediums über die gesamte Breite des Flussfeldes an dessen Kanäle vorweist. In der DE 101 63 631 A1 wird eine Bipolarplatte beschrieben, die Stegreihen mit jeweils drei Stegen vorweist, wobei die Stege zweier jeweils zueinander benachbarter Stegreihen in Strömungsrichtung versetzt sind, sodass eine Querströmung ermöglicht ist.

Eine Bipolarplatte mit den Merkmalen des Oberbegriffs von Anspruch 1 ist aus der KR 20120042376 A bekannt, bei der die Kanäle des Flussfeldes durch mehrere geneigt zur Strömungsrichtung verlaufenden Bypasskanäle verbunden sind.

Aufgabe der vorliegenden Erfindung ist es, eine Bipolarplatte bereit zu stellen, bei der die Nutzung mindestens eines der Reaktanten verbessert ist.

Diese Aufgabe wird durch eine Bipolarplatte mit den Merkmalen des Anspruchs 1 gelöst. Vorteilhafte Ausgestaltungen mit zweckmäßigen Weiterbildungen der Erfindung sind in den abhängigen Ansprüchen angegeben.

Die eingangs genannte Bipolarplatte bietet den Vorteil, dass weniger von dem Reaktanten von dem Einlassport durch den Bypasskanal direkt zu dem Auslasskanal geführt wird und so nicht für die Reaktion zur Verfügung steht. Vielmehr wird der Verlust durch die Bypass-Strömung reduziert und zugleich bewirkt, dass die im Flussfeld durch den Verbrauch der Reaktanten erfolgende Konzentrationsverminderung gemildert wird, da dem Flussfeld wieder frischer Reaktant in ursprünglicher Konzentration zugeführt wird. Der Bypasskanal selbst verläuft in einem Bereich der Platte, der außerhalb des aktiven Bereichs liegt, in welchem die elektrochemische Reaktion abläuft. Die Strömungsverbindung ist in der dem Auslassport zugewandten Hälfte des Flussfeldes ausgebildet ist. In dieser Hälfte liegt bereits eine deutliche Reduktion der Konzentration der Reaktanten beziehungsweise von deren Partialdruck vor, so dass die Zuführung der Reaktanten aus dem Bypasskanal wieder zu einer erhöhten Konzentration beziehungsweise einem erhöhten Partialdruck führt und so die gewünschte Reaktion besser abläuft. Eine Unterversorgung wird vermieden. Einer verbesserten Ausnutzung der Reaktantenströmung dient, dass stromauf des Auslassports in dem Bypasskanal ein Bypassblocker angeordnet ist, so dass aufgrund des Bypassblockers die Ableitung durch die Strömungsverbindung erfolgt. Der Byplassblocker kann damit auch durch einen deutlich erhöhten Strömungswiderstand beziehungsweise durch Dichtungen oder Dichtungsstrukturen gebildet sein, um so die Reaktantenströmung auf den Weg des geringsten Widerstandes durch die Strömungsverbindung zu zwingen.

Die Vorteile ergeben sich besonders deutlich, wenn auf beiden Seiten des ersten Flussfeldes und auf beiden Seiten des zweiten Flussfeldes jeweils ein Bypasskanal vorliegt, und wenn aus jedem der Bypasskanäle mindestens eine Strömungsverbindung in den benachbarten Randkanal abzweigt. Dabei wird ausgenutzt, dass in der Regel auf beiden Seiten jedes einzelnen Flussfeldes Reaktantenströme vorliegen, und so eine bessere Ausnutzung jedes Reaktanten gegeben ist und weniger davon direkt zum Auslassport geführt wird. Auch liegt an beiden Rändern des jeweiligen Flussfeldes damit eine Erhöhung der Reaktantenkonzentration vor.

Vorteilhaft ist es auch, wenn dem Bypasskanal mehrere Strömungsverbindungen zugeordnet sind, die in Strömungsrichtung beabstandet zueinander ausgebildet sind, da so eine bessere Ausnutzung der Reaktantenströmung in dem Bypasskanal erfolgt und eine unvollständige Ableitung durch die erste Strömungsverbindung durch die nachfolgenden Strömungsverbindungen korrigiert werden kann.

Wenn in dem Randkanal stromab der Strömungsverbindung eine Randkanalverbindung zu dem benachbarten Kanal des Flussfeldes ausgebildet ist, und wenn stromab der Randkanalverbindung in dem Flussfeld jeweils benachbarte Kanäle eine Kanalverbindung aufweisen, dann kann das Frischgas des Reaktanten quer zu der Strömungsrichtung in dem Flussfeld für mehrere Kanäle bereit gestellt werden, so dass nicht nur der äußerste Kanal des Flussfeldes, also der Randkanal von der Bypass-Strömung profitiert.

Die Herstellung der Bipolarplatte beinhaltet in der Regel die Umformung metallischer Platten, so dass die Kanäle des Flussfeldes und der Bypasskanal durch Stege voneinander getrennt sind. Die Strömungsverbindung lässt sich dann in einfacher Weise durch eine Reduktion der Steghöhe realisieren. Dieser Vorteil gilt vergleichbar auch, wenn die Randkanalverbindung und/oder die Kanalverbindung durch eine Reduktion der Steghöhe realisiert ist. Dabei kann auch die Steghöhe komplett reduziert sein, also bis zur Steghöhe null, da so die Umformung vereinfacht ist.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung einer Brennstoffzellenvorrichtung mit einem eine Mehrzahl von Brennstoffzellen aufweisenden Brennstoffzellenstapel, dessen Brennstoffzellen Bipolarplatten aufweisen,
- Fig. 2: eine Draufsicht auf eine schematische Darstellung einer aus dem Stand der Technik bekannten Bipolarplatte,
- Fig. 3: eine Draufsicht auf eine schematischen Darstellung einer aus dem Stand der Technik bekannten Bipolarplatte mit dem schematisch dargestellten Konzentrationsabfall des Reaktantengases in einem Flussfeld und angedeuteten Bypass-Strömen,
- Fig. 4: einen Querschnitt durch eine aus dem Stand der Technik bekannte Bipolarplatte in Kanalrichtung des Flussfeldes,
- Fig. 5: eine der Figur 3 entsprechende Darstellung einer nicht erfindungsgemäßen Bipolarplatte,
- Fig. 6: ein Prinzipbild zur Nutzung des Bypass-Stromes,
- Fig. 7: eine vereinfachte schematische Darstellung entsprechend Figur 4 zur Einleitung des Bypass-Stromes in den Randkanal des Flussfeldes,
- Fig. 8: eine der Figur 6 entsprechende Darstellung einer alternativen Ausführungsform,
- Fig. 9: eine der Figur 7 entsprechende Darstellung der Ausführungsform aus Figur 8,
- Fig. 10: ein Prinzipbild zur Nutzung des Bypass-Stromes in mehreren Kanälen des Flussfeldes,
- Fig. 11: eine der Figur 6 entsprechende Darstellung zur Erläuterung der Ausführungsform gemäß Figur 10,
- Fig. 12: eine der Figur 7 entsprechende Darstellung der Ausführungsform aus Figur 10,
- Fig. 13: eine der Figur 11 entsprechende Darstellung einer weiteren Ausführung,
- Fig. 14: eine der Figur 12 entsprechende Darstellung der Ausführungsform aus Figur 13, und
- Fig. 15: eine der Figur 10 entsprechende Darstellung zur mehrfachen Einleitung des Bypass-Stromes in das Flussfeld.

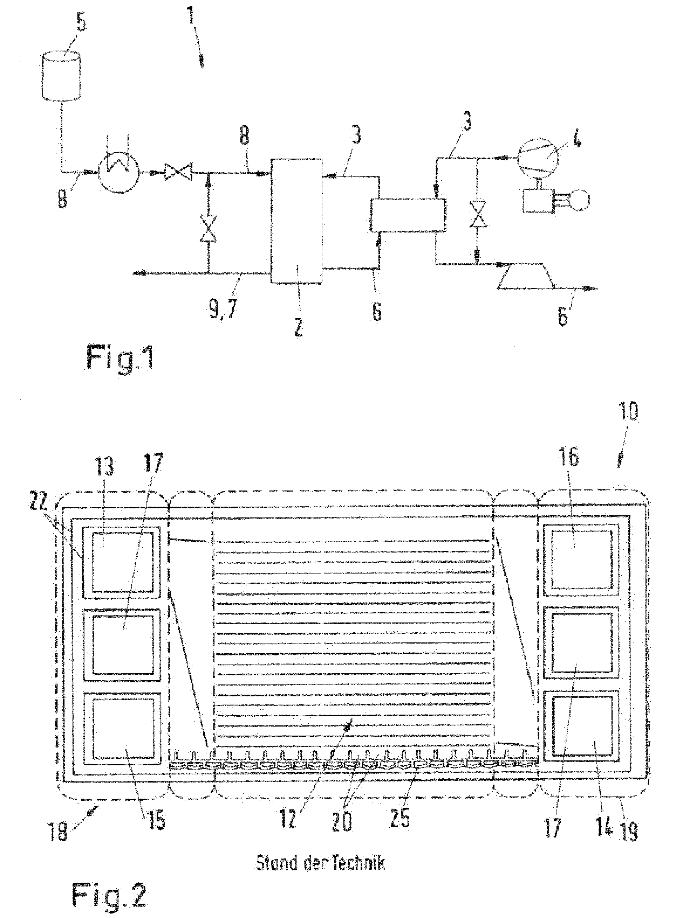

In der Figur 1 ist schematisch eine Brennstoffzellenvorrichtung 1 gezeigt, die eine Brennstoffzelle beziehungsweise eine Mehrzahl zu einem Brennstoffzellenstapel 2 zusammengefasster Brennstoffzellen aufweist.

Der Brennstoffzellenstapel 2 besteht aus einer Mehrzahl in Reihe geschalteter Brennstoffzellen. Jede der Brennstoffzellen umfasst eine Anode und eine Kathode sowie eine die Anode von der Kathode trennende protonenleitfähige Membran. Die Membran ist aus einem Ionomer, vorzugsweise einem sulfonierten Tetrafluorethylen-Polymer (PTFE) oder einem Polymer der perfluorierten Sulfonsäure (PFSA) gebildet. Alternativ kann die Membran als eine sulfonierte Hydrocarbon-Membran gebildet sein.

Den Anoden und/oder den Kathoden kann zusätzlich ein Katalysator beigemischt sein, wobei die Membranen vorzugsweise auf ihrer ersten Seite und/oder auf ihrer zweiten Seite mit einer Katalysatorschicht aus einem Edelmetall oder aus Gemischen umfassend Edelmetalle wie Platin, Palladium, Ruthenium oder dergleichen beschichtet sind, die als Reaktionsbeschleuniger bei der Reaktion der jeweiligen Brennstoffzelle dienen.

Über Anodenräume innerhalb des Brennstoffzellenstapels 2 wird den Anoden Brennstoff (zum Beispiel Wasserstoff) zugeführt. In einer Polymerelektrolytmembranbrennstoffzelle (PEM-Brennstoffzelle) werden an der Anode Brennstoff oder Brennstoffmoleküle in Protonen und Elektronen aufgespaltet. Die Membran lässt die Protonen (zum Beispiel H⁺) hindurch, ist aber undurchlässig für die Elektronen (e⁻). An der Anode erfolgt dabei die folgende Reaktion: 2H₂ → 4H⁺ + 4e⁻ (Oxidation/Elektronenabgabe). Während die Protonen durch die Membran zur Kathode hindurchtreten, werden die Elektronen über einen externen Stromkreis an die Kathode oder an einen Energiespeicher geleitet.

Über Kathodenräume innerhalb des Brennstoffzellenstapels 2 kann den Kathoden Kathodengas (zum Beispiel Sauerstoff oder Sauerstoff enthaltende Luft) zugeführt werden, so dass kathodenseitig die folgende Reaktion stattfindet: O₂ + 4H⁺ + 4e⁻ → 2H₂O (Reduktion/Elektronenaufnahme).

Dem Brennstoffzellestapel 2 wird über eine Kathodenfrischgasleitung 3 durch einen Verdichter 4 komprimierte Luft zugeführt. Zusätzlich ist die Brennstoffzelle mit einer Kathodenabgasleitung 6 verbunden. Anodenseitig wird dem Brennstoffzellenstapel 2 in einem Wasserstofftank 5 bereitgehaltener Wasserstoff über eine Anodenfrischgasleitung 8 zugeführt zur Bereitstellung der für die elektrochemische Reaktion in einer Brennstoffzelle erforderlichen Reaktanten. Diese Gase werden an Bipolarplatten 10 übergeben, in denen Kanäle 11 ausgebildet und zu einem Flussfeld 12 zusammengefasst sind für die Verteilung der Gase an die Membran. Zusätzlich sind die Bipolarplatten 10 vorgesehen für die Durchleitung eines Kühlmediums, so dass auf kleinstem Raum drei verschiedene Medien geführt werden. Aus dem Stand der Technik bekannte Bipolarplatten 10 sind in den Figuren 2 bis 4 gezeigt, wobei Figur 2 für ein Medium die Einleitung durch einen ersten Einlassport 13 zeigt mit der Übergabe an das Flussfeld 12 und die Ausleitung durch einen ersten Auslassport 14. Für den zweiten Reaktanten steht in vergleichbarer Weise die Rückseite der Bipolarplatte 10 zur Verfügung mit einem zweiten Einlasssport 15 und einem zweiten Auslasssport 16. Der erste Einlassport 13 und der zweite Einlassport 15 können zusammen mit einem Mediumport 17 für ein Kühlmittel in einem Einlassheader 18 zusammengefasst sein. Analog steht ein Auslassheader 19 zur Verfügung.

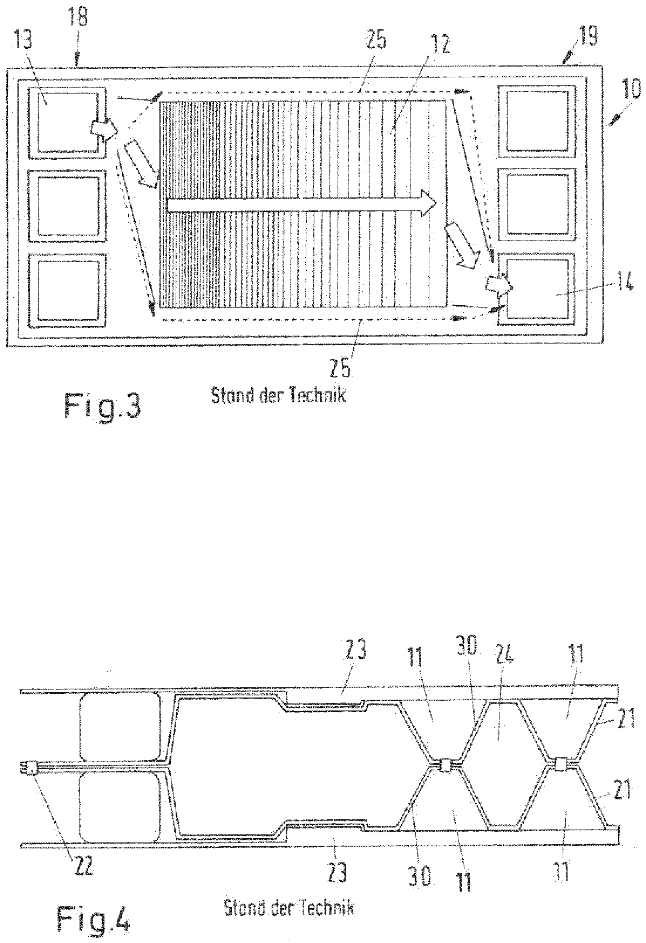

Am Flussfeld 12 vorbei strömt ein Bypass-Strom, der auch durch Bypass-blockierende Strukturen 20 nicht vollständig unterbunden werden kann. Figur 3 verweist auf den grundsätzlichen Umstand, dass aufgrund des Verbrauchs der Reaktanten deren Partialdruck vom Einlassheader 18 zum Auslassheader 19 hin abnimmt. Figur 4 verweist auf den bekannten Aufbau von Bipolarplatten 10, für die zwei metallische Umformteile 21 mit Dichtspuren 22 versehen und verschweißt werden. Oberhalb und unterhalb der Bipolarplatten 10 sind die Membran-Elektrodenanordnungen MEA 23 angeordnet. Ersichtlich sind auch die Kanäle 11 für den Brennstoff und das Oxidationsmittel und die Kanäle 24 für das Kühlmedium.

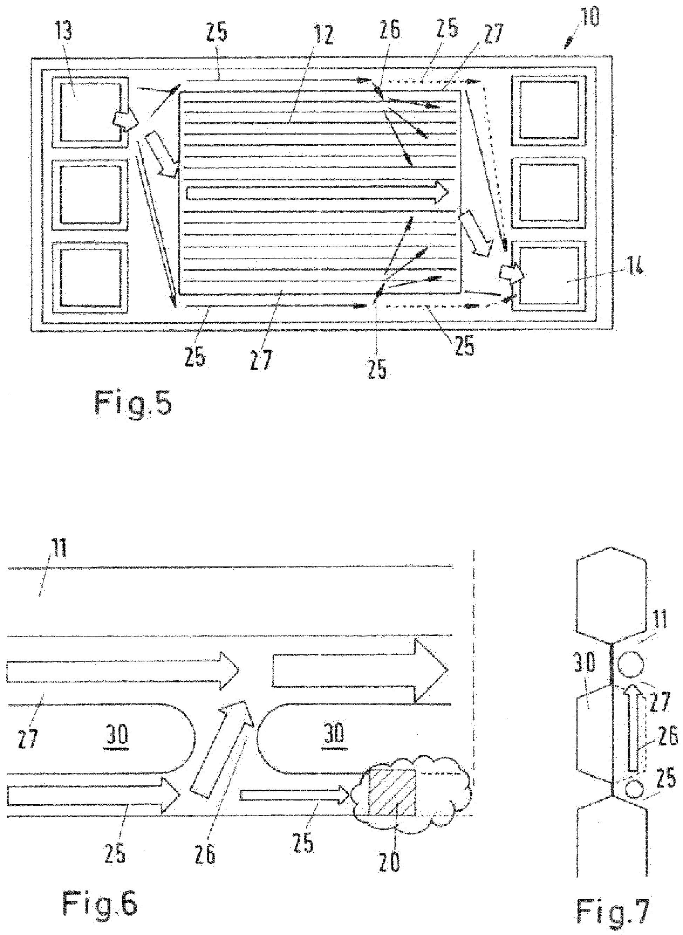

Bei einer beispielsweise in Figur 5 gezeigten Bipolarplatte 10 mit einem ersten Einlassport 13 und einem eine Mehrzahl von Kanälen 11 aufweisenden ersten Flussfeld 12 zur Verbindung des ersten Einlassports 13 mit einem ersten Auslassport 14 für einen ersten Reaktanten, und mit einem zweiten Einlassport 15 und einem eine Mehrzahl von Kanälen 11 aufweisenden zweiten Flussfeld zur Verbindung des zweiten Einlassports 15 mit einem zweiten Auslassport 16 für einen zweiten Reaktanten, wobei randseitig von mindestens einem der Flussfelder 12 mindestens ein Bypasskanal 25 vorliegt, ist die Gestaltung so getroffen, dass dem Bypasskanal 25 mindestens eine Strömungsverbindung 26 zugeordnet ist, die aus dem Bypasskanal 25 in einen benachbarten Randkanal 27 des Flussfeldes 12 abzweigt. In den gezeigten Ausführungsbeispielen liegt auf beiden Seiten des ersten Flussfeldes 12 und auf beiden Seiten des zweiten Flussfeldes 12 jeweils ein Bypasskanal 25 vor, wobei aus jedem der Bypasskanäle 25 mindestens eine Strömungsverbindung 26 in den benachbarten Randkanal 27 abzweigt. Gezeigt in der Figur 5 ist dies für eines der Flussfelder 12 für einen der Reaktanten, wobei die Verhältnisse für das zweite Flussfeld sinngemäß gleich gestaltet sind.

Figur 5 lässt auch erkennen, dass die Strömungsverbindung 26 in der dem Auslassport 14 zugewandten Hälfte des Flussfeldes 12 ausgebildet ist, um so den Reaktanten in den Bereich des Flussfeldes 12 einzuleiten, in dem bereits eine deutliche Reduktion der Reaktantenkonzentration vorliegt. Stromauf des Auslassports 14 ist in dem Bypasskanal 25 ein Bypassblocker, nämlich die Bypass-blockierende Struktur 20, angeordnet (Figur 6), der dafür sorgt, dass der Bypass-Strom dem Weg des geringsten Widerstandes folgt und durch die Strömungsverbindung 26 strömt.

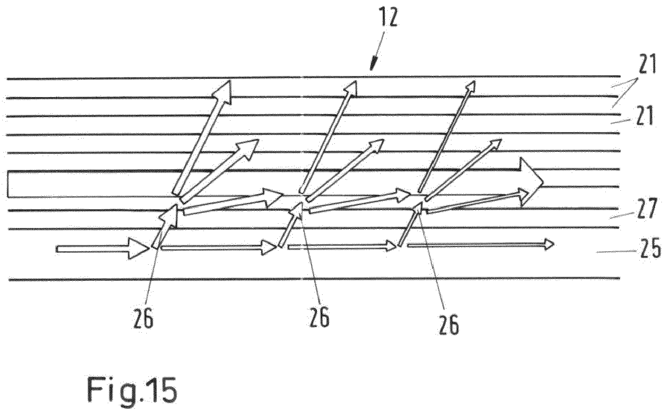

Figur 15 verweist darauf, dass dem Bypasskanal 25 auch mehrere Strömungsverbindungen 26 zugeordnet sein können, die in Strömungsrichtung beabstandet zueinander ausgebildet sind, also an unterschiedlichen Stellen Frischgas wieder dem Flussfeld 12 zugeführt werden kann.

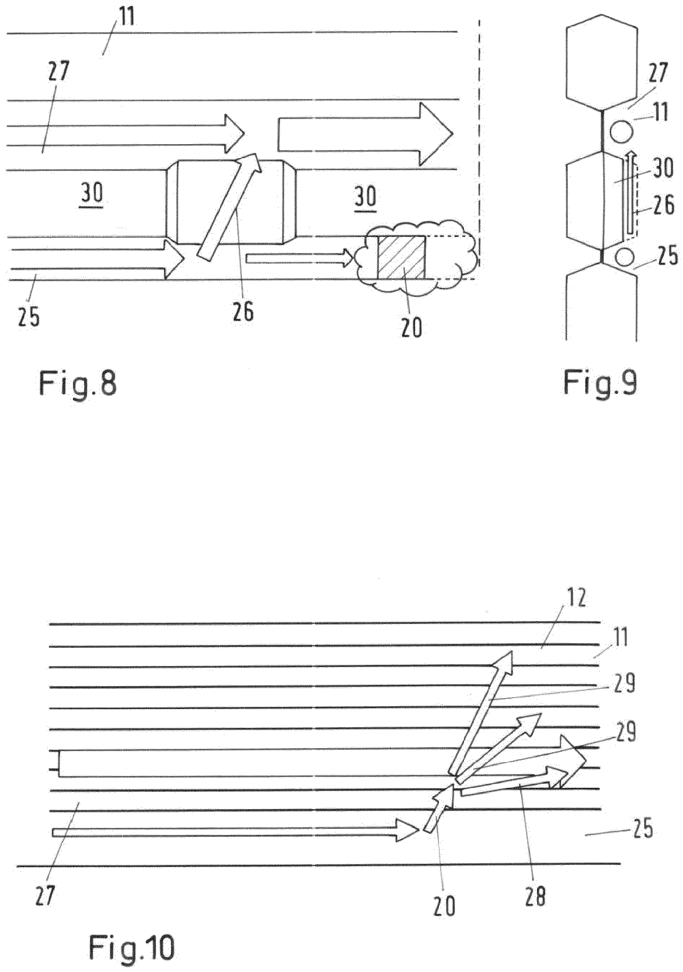

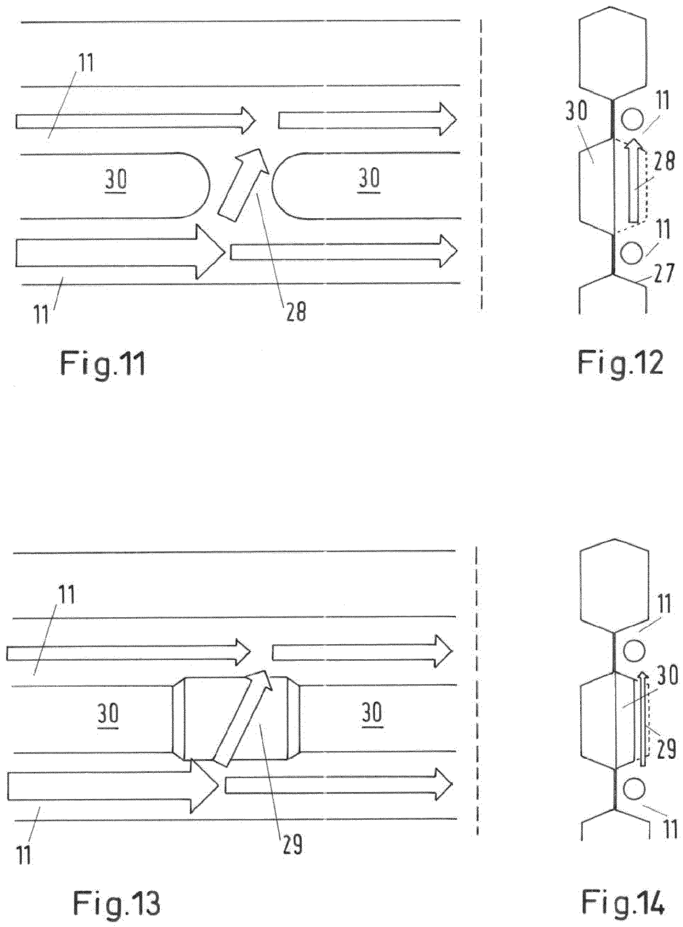

Die Figuren 10 und 11 zeigen, dass in dem Randkanal 27 stromab der Strömungsverbindung 26 eine Randkanalverbindung 28 zu dem benachbarten Kanal 11 des Flussfeldes 12 ausgebildet ist. Auch stromab der Randkanalverbindung 28 weisen in dem Flussfeld 12 jeweils benachbarte Kanäle 11 eine Kanalverbindung 29 auf. Damit besteht die Möglichkeit, quer zu der Strömungsrichtung in dem Flussfeld 12 wieder Frischgas diesem zuzuführen, so dass nicht nur der Randkanal 27 des Flussfeldes 12 den Bypass-Strom ausnutzen kann.

Die Figur 4 zeigt, dass die Kanäle 11 des Flussfeldes 12 und der Bypasskanal 25 durch Stege 30 voneinander getrennt sind. In den gezeigten, zur Erfindung gehörenden Ausführungsformen ist die Strömungsverbindung 26 durch eine Reduktion der Steghöhe realisiert, und zwar auch hinsichtlich der Randkanalverbindung 28 und der Kanalverbindung 29, wobei die Reduktion der Steghöhe vollständig sein kann, also der Steg 30 in diesen Bereichen entfällt, wie dies in den Figuren 7 und 12 gezeigt ist.

### BEZUGSZEICHENLISTE:

- 1: Brennstoffzellenvorrichtung
- 2: Brennstoffzellenstapel
- 3: Kathodenfrischgasleitung
- 4: Verdichter
- 5: Wasserstofftank
- 6: Kathodenabgasleitung
- 7: Anodenrezirkulationsleitung
- 8: Anodenfrischgasleitung
- 9: Anodenabgasleitung
- 10: Bipolarplatte
- 11: Kanäle
- 12: Flussfeld
- 13: erster Einlassport
- 14: erster Auslassport
- 15: zweiter Einlassport
- 16: zweiter Auslassport
- 17: Mediumport
- 18: Einlassheader
- 19: Auslassheader
- 20: Bypass-blockierende Struktur
- 21: Umformteil
- 22: Dichtspur
- 23: Membran-Elektrodenanordnung
- 24: Kanal für Kühlmedium
- 25: Bypasskanal
- 26: Strömungsverbindung
- 27: Randkanal
- 28: Randkanalverbindung
- 29: Kanalverbindung
- 30: Steg

## Patentansprüche

1. Bipolarplatte (10) mit einem ersten Einlassport (13) und einem eine Mehrzahl von Kanälen (11) aufweisenden Flussfeld (12) zur Verbindung des ersten Einlassports (13) mit einem ersten Auslassport (14)für einen ersten Reaktanten, und mit einem zweiten Einlassport (15) und einem eine Mehrzahl von Kanälen (11) aufweisenden Flussfeld (12) zur Verbindung des zweiten Einlassports (15) mit einem zweiten Auslassport (16) für einen zweiten Reaktanten, wobei randseitig von mindestens einem der Flussfelder (12) mindestens ein Bypasskanal (25) vorliegt, wobei dem Bypasskanal (25) mindestens eine Strömungsverbindung (26) zugeordnet ist, die aus dem Bypasskanal (25) in einen benachbarten Randkanal (27) des Flussfeldes (12) abzweigt, **dadurch gekennzeichnet, dass** der Bypasskanal (25) in einem Bereich der Bipolarplatte (10) verläuft, der außerhalb eines aktiven Bereichs liegt, in welchem die elektrochemische Reaktion verläuft, dass die Strömungsverbindung (26) in der dem Auslassport (14) zugewandten Hälfte des Flussfeldes (12) ausgebildet ist, um so den Reaktanten in den Bereich des Flussfeldes (12) einzuleiten, in dem bereits eine chemische Reduktion einer Reaktantenkonzentration vorliegt und dass stromauf des Auslassports (14) in dem Bypasskanal (25) ein Bypassblocker (20) angeordnet ist.

2. Bipolarplatte (10) nach Anspruch 1, **dadurch gekennzeichnet, dass** auf beiden Seiten beider Flussfelder (12) und jeweils ein Bypasskanal (25) vorliegt, und dass aus jedem der Bypasskanäle (25) mindestens eine Strömungsverbindung (26) in den benachbarten Randkanal (27) abzweigt.

3. Bipolarplatte (10) nach Anspruch 1 oder 2, **dadurch gekennzeichnet, dass** dem Bypasskanal (25) mehrere Strömungsverbindungen (26) zugeordnet sind, die in Strömungsrichtung beabstandet zueinander ausgebildet sind.

4. Bipolarplatte (10) nach einem der Ansprüche 1 bis 3, **dadurch gekennzeichnet, dass** in dem Randkanal (27) stromab der Strömungsverbindung (26) eine Randkanalverbindung (28) zu dem benachbarten Kanal (11) des Flussfeldes (12) ausgebildet ist.

5. Bipolarplatte (10) nach Anspruch 4, **dadurch gekennzeichnet, dass** stromab der Randkanalverbindung (28) in dem Flussfeld (12) jeweils benachbarte Kanäle (11) eine Kanalverbindung (29) aufweisen.

6. Bipolarplatte (10) nach einem der Ansprüche 1 bis 5, **dadurch gekennzeichnet, dass** die Kanäle (11) des Flussfeldes (12) und der Bypasskanal (25) durch Stege (30) voneinander getrennt sind, und dass die Strömungsverbindung (26) durch eine Reduktion der Steghöhe realisiert ist.

7. Bipolarplatte (10) nach Anspruch 6, **dadurch gekennzeichnet, dass** die Randkanalverbindung (28) und/oder die Kanalverbindung (29) durch eine Reduktion der Steghöhe realisiert ist.

8. Bipolarplatte (10) nach Anspruch 6 oder 7, **dadurch gekennzeichnet, dass** die Steghöhe komplett reduziert ist.

## Claims

1. A bipolar plate (10) with a first inlet port (13) and a flow field (12) having a plurality of channels (11) for connecting the first inlet port (13) to a first outlet port (14) for a first reactant, and with a second inlet port (15) and a flow field (12) comprising a plurality of channels (11) for connecting the second inlet port (15) to a second outlet port (16) for a second reactant, wherein at least one bypass channel (25) is provided at the edge of at least one of the flow fields (12), at least one bypass channel (25) is provided, wherein at least one flow connection (26) is assigned to the bypass channel (25), which branches off from the bypass channel (25) into an adjacent edge channel (27) of the flow field (12), **characterized in that** the bypass channel (25) runs in an area of the bipolar plate (10) that lies outside an active area in which the electrochemical reaction takes place, **in that** the flow connection (26) is formed in the half of the flow field (12) facing the outlet port (14) in order to introduce the reactant into the area of the flow field (12) in which chemical reduction of a reactant concentration is already present, and that a bypass blocker (20) is arranged upstream of the outlet port (14) in the bypass channel (25).

2. The bipolar plate (10) according to claim 1, **characterized in that** there is a bypass channel (25) on both sides of both flow fields (12), and that at least one flow connection (26) branches off from each of the bypass channels (25) into the adjacent edge channel (27).

3. The bipolar plate (10) according to claim 1 or 2, **characterized in that** the bypass channel (25) has several flow connections (26) assigned to it, which are spaced apart from each other in the direction of flow.

4. The bipolar plate (10) according to any one of claims 1 to 3, **characterized in that** an edge channel connection (28) to the adjacent channel (11) of the flow field (12) is formed in the edge channel (27) downstream of the flow connection (26).

5. The bipolar plate (10) according to claim 4, **characterized in that** downstream of the edge channel connection (28) in the flow field (12), adjacent channels (11) each have a channel connection (29).

6. The bipolar plate (10) according to any one of claims 1 to 5, **characterized in that** the channels (11) of the flow field (12) and the bypass channel (25) are separated from each other by webs (30), and **in that** the flow connection (26) is realized by reducing the web height.

7. The bipolar plate (10) according to claim 6, **characterized in that** the edge channel connection (28) and/or the channel connection (29) is realized by reducing the web height.

8. The bipolar plate (10) according to claim 6 or 7, **characterized in that** the web height is completely reduced.

## Revendications

1. Plaque bipolaire (10) avec un premier orifice d'entrée (13) et un champ d'écoulement (12) présentant une pluralité de canaux (11) pour la liaison du premier orifice d'entrée (13) avec un premier orifice de sortie (14) pour un premier réactif, et avec un second orifice d'entrée (15) et un champ d'écoulement (12) présentant une pluralité de canaux (11) pour la liaison du second orifice d'entrée (15) avec un second orifice de sortie (16) pour un second réactif, dans laquelle au moins un canal de dérivation (25) se trouve côté bord d'au moins un des champs d'écoulement (12), dans laquelle au moins une liaison d'écoulement (26) est associée au canal de dérivation (25), liaison qui bifurque du canal de dérivation (25) dans un canal de bord (27) contigu du champ d'écoulement (12), **caractérisée en ce que** le canal de dérivation (25) s'étend dans une zone de la plaque bipolaire (10), canal qui se trouve en dehors d'une zone active, dans laquelle la réaction électrochimique s'étend, **en ce que** la liaison d'écoulement (26) est formée dans la moitié du champ d'écoulement (12) tournée vers l'orifice de sortie (14) afin d'introduire ainsi le réactif dans la zone du champ d'écoulement (12) dans lequel se trouve déjà une réduction chimique d'une concentration de réactif et **en ce qu'**un élément de blocage de dérivation (20) est agencé en amont de l'orifice de sortie (14) dans le canal de dérivation (25).

2. Plaque bipolaire (10) selon la revendication 1, **caractérisée en ce que** respectivement un canal de dérivation (25) se situe des deux côtés des deux champs d'écoulement (12) et **en ce qu'**au moins une liaison d'écoulement (26) dans le canal de bord (27) contigu bifurque de chacun des canaux de dérivation (25).

3. Plaque bipolaire (10) selon la revendication 1 ou 2, **caractérisée en ce que** plusieurs liaisons d'écoulement (26) sont associées au canal de dérivation (25), liaisons qui sont formées dans le sens d'écoulement à distance les unes des autres.

4. Plaque bipolaire (10) selon l'une quelconque des revendications 1 à 3, **caractérisée en ce qu'**une liaison de canal de bord (28) avec le canal (11) contigu du champ d'écoulement (12) est formée dans le canal de bord (27) en aval de la liaison d'écoulement (26).

5. Plaque bipolaire (10) selon la revendication 4, **caractérisée en ce qu'**en aval de la liaison de canal de bord (28) dans le champ d'écoulement (12), respectivement des canaux (11) contigus présentent une liaison de canal (29).

6. Plaque bipolaire (10) selon l'une quelconque des revendications 1 à 5, **caractérisée en ce que** les canaux (11) du champ d'écoulement (12) et le canal de dérivation (25) sont séparés les uns des autres par des nervures (30) et **en ce que** la liaison d'écoulement (26) est réalisée par une réduction de la hauteur de nervure.

7. Plaque bipolaire (10) selon la revendication 6, **caractérisée en ce que** la liaison de canal de bord (28) et/ou la liaison de canal (29) est réalisée par une réduction de la hauteur de nervure.

8. Plaque bipolaire (10) selon la revendication 6 ou 7, **caractérisée en ce que** la hauteur de nervure est complètement réduite.
